# EUROPÄISCHE PATENTSCHRIFT

(11) **EP 1 854 712 B1**
(45) Veröffentlichungstag und Bekanntmachung des Hinweises auf die Patenterteilung: **04.11.2009**
(21) Anmeldenummer: 07007422.4
(22) Anmeldetag: 11.04.2007
(51) Int. Cl.: B62K 25/08

(54) **Federgabel**
Suspension fork
Fourche élastique

(30) Priorität: 13.05.2006 DE 102006022473
(43) Veröffentlichungstag der Anmeldung: 14.11.2007
(73) Patentinhaber: Gustav Magenwirth GmbH & Co. KG, 72574 Bad Urach (DE)
(72) Erfinder: Künstle, Reiner, 72555 Metzingen (DE)
(74) Vertreter: Maucher, Wolfgang

(56) Entgegenhaltungen:
- EP-A- 0 425 273
- WO-A-01/70563
- US-A- 5 009 451

## Beschreibung

Gegenstand der Erfindung ist eine Federgabel für Zweiräder, insbesondere Fahrräder, die ein Tauchrohr und ein Standrohr mit einem Federelement aufweist, das von einem mit dem Tauchrohr in Verbindung stehenden Kolben beaufschlagt ist, wobei der Kolben eine Kolbenstange hat, die mit dem Tauchrohr verbunden ist.

Bei solchen Zweirad-Federgabeln ist es bekannt, in Anpassung an zum Beispiel Fahrweise und Untergrund beziehungsweise Streckenprofil, den Federweg zu verstellen, indem der untere Bereich der Kolbenstange über ein Gewinde höhenverstellt wird. Die Bedienung erfolgt beispielsweise manuell über einen Drehknopf.

Nachteilig ist dabei, dass die Einstellung des Federwegs zeitaufwendig und umständlich ist, insbesondere, wenn oftmals eine Nachjustierung erfolgen muss.

Aus der US Patentschrift 5,009,451 ist eine Federgabel bekannt, bei der der Federweg hydraulisch verstellbar ist. Dazu weist die Federgabel einen zusätzlichen Fluidzylinder mit einem darin in Längsrichtung beweglichen Kolben auf. Der Kolben teilt den Zylinder fluiddicht in zwei Kammern. Beide Kammern sind vollständig mit einem Fluid gefüllt. Jede Kammer weist einen nach Außen geführten Fluidanschluss auf, durch den Fluid in die Kammern hinein gedrückt oder aus den Kammern heraus gesaugt werden kann. Um den Kolben zu verstellen, muss über eine externe Verbindung aus einer Kammer Fluid abgesaugt werden und die exakt gleiche Menge in die andere Kammer hinein gepresst werden. Die Verstelleinrichtung ist dadurch Anfällig für Beschädigungen und die Handhabung ist umständlich.

Es besteht daher die Aufgabe, eine Federgabel zu schaffen, bei der die Einstellung des Federwegs schnell, unkompliziert und präzise vorgenommen werden kann.

Zur Lösung wird eine Federgabel mit den Merkmalen des Anspruchs 1 vorgeschlagen.

Mit dieser Federgabel lässt sich der Verstellkolben im Verstellzylinder leicht positionieren. Durch Öffnen des Verbindungskanals kann der Verstellkolben innerhalb des Zylinders in eine gewünschte Position bewegt sowie durch Schließen des Verbindungskanals in dieser Postition blockiert werden. Das Verstellen des Federwegs lässt sich somit besonders einfach, schnell und präzise vornehmen. Ist der Verbindungskanal geöffnet, kann die Federgabel mit geringer Kraft komprimiert und damit dem Federweg verkürzt werden. Zum Einstellen eines längeren Federwegs wird die Federgabel bei geöffnetem Verbindungskanal ohne Druck auf die Gabel durch Federkraft auf einen längeren Federweg gedrückt.

Zweckmäßig ist es, wenn der Verbindungskanal den Verstellkolben durchsetzt, so dass der Flüssigkeitsaustausch ohne externe Verbindungsleitungen direkt im Verstellzylinder erfolgen kann und das System wenig störanfällig beziehungsweise wartungsarm ist.

Der Öffnungs- und Schließmechanismus des oder der Verbindungskanals/-kanäle wird dadurch realisiert, dass der mit mindestens einer Durchgangsbohrung versehene Verstellkolben drehbar ist und vorzugsweise beidseitig des Verstellkolbens drehfest mit einem Halteelement verbundene Stellscheiben angeordnet sind, die jeweils mindestens eine mit einer Durchgangsbohrung im Verstellkolben deckungsgleich bringbare Öffnung aufweisen. Liegen die Durchgangsbohrung oder -bohrungen des Verstellzylinders deckungsgleich über der Öffnung oder den Öffnungen der Stellscheiben, besteht eine Verbindung zwischen den beiden Zylinderkammern des Verstellzylinders und die Flüssigkeit kann überströmen.

Nach einer weiteren vorteilhaften Ausgestaltung der Erfindung ist die Kolbenstange drehfest mit dem Verstellkolben sowie mit einer Drehstange verbunden, welche das obere Ende des Federbeins überragt sowie eine Drehhandhabe aufweist. Durch Verdrehen der Drehstange ist der Verstellkolben mit seiner Durchgangsbohrung deckungsgleich mit der jeweiligen Öffnung in den Stellscheiben bringbar. Auf diese Weise kann durch Drehen der Handhabe der Verstellkolben relativ zu den Öffnungen der Stellscheiben bis zur Deckungsgleiche gebracht werden. In einer gewünschten Einfederposition der Federgabel kann der Verstellkolben dann durch Verschließen der Verbindungskanäle, das heißt durch Verdrehen der Handhabe oder Loslassen der Handhabe bei einer Federrückführung, blockiert werden.

Zur Verkürzung des Federwegs kann die Federgabel bei geöffneten Verbindungskanälen komprimiert werden, so dass der Verstellkolben in dem Verstellzylinder weiter nach unten gelangt und sich Tauch- und Standrohr um den entsprechenden Verstellweg des Verstellkolbens ineinanderschieben. In der gewünschten Einfederposition lässt sich der Verstellkolben durch Schließen der Verbindungskanäle blockieren. Werden die Verbindungskanäle durch entsprechendes Betätigen der Handhabe geöffnet und kein Druck oder Zug auf die Federgabel ausgeübt, bewegt sich der Kolben im Verstellzylinder durch die Federkraft nach oben, der ineinandergeschobene Bereich von Tauch- und Standrohr wird entsprechend auseinandergezogen und der Federweg dadurch verlängert. Durch den gewählten Federweg kann unter anderem auch eine Anpassung an die Sitzposition des Fahrers vorgenommen werden.

In einer bevorzugten Ausführungsform ist der Verstellzylinder als geschlossene Ölkartusche ausgebildet und daher leicht zu montieren und wartungsarm.

Das Federelement der Federgabel kann aus einer oder mehreren Federn und/oder (Feder-)Elastomeren und/oder Luft und/oder Flüssigkeit bestehen.

Die erfindungsgemäße Vorrichtung kann in beiden Federbeinen oder auch nur in einem Federbein beziehungsweise in Gabelschaftfederungen und dergleichen Federungen eingesetzt werden. Dabei kann die erfindungsgemäße Vorrichtung in Federgabeln mit einer Feder je Holm oder mit zwei parallel geschalteten Federn in einem Holm betrieben werden.

Weitere Einzelheiten der Erfindung sind anhand der in den Zeichnungen dargestellten Ausführungsbeispiele näher erläutert. Es zeigt:
- Fig. 1: einen Längsschnitt durch eine erfindungsgemäß ausgestattete Federgabel in schematisierter Darstellung,
- Fig. 2: einen Längsschnitt im Bereich eines Verstellzylinders mit Verstellkolben, Stellscheiben und Halteelement in Schließstellung,
- Fig. 3: eine Detaildarstellung des in Fig.2 markierten Ausschnitts,
- Fig. 4: einen Längsschnitt im Bereich des Verstellzylinders mit Verstellkolben, Stellscheiben und Halteelement in Offenstellung,
- Fig. 5: eine Detaildarstellung des in Fig.4 markierten Ausschnitts,
- Fig. 6: eine perspektivische Ansicht eines Federbeins im Bereich des längs geschnitten dargestellten Verstellzylinders mit Verstellkolben in Schließstellung,
- Fig. 7: eine perspektivische Ansicht eines Federbeins im Bereich des längs geschnitten dargestellten Verstellzylinders mit Verstellkolben in Offenstellung sowie
- Fig. 8: einen Längsschnitt durch den Verstellzylinder mit Verstellkolben, Stellscheiben, Halteelement und Haltestift.

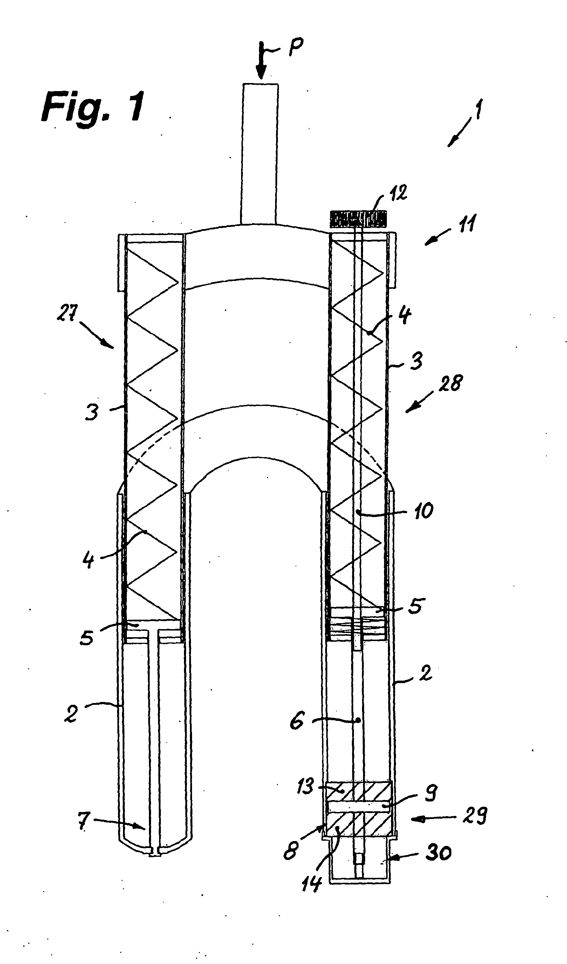

Eine in Fig. 1 im Ganzen mit 1 bezeichnete Federgabel weist zwei Federbeine 27, 28 jeweils mit einem Tauchrohr 2 und einem Standrohr 3 sowie darin befindlichen Druckfedern 4 auf, die jeweils von einem Kolben 5 beaufschlagt werden, welche in den Standrohren 3 geführt sind. Die Kolben 5 weisen jeweils eine Kolbenstange 6 auf, die an ihrem unteren Endbereich 7 mit dem Tauchrohr 2 verbunden sind.

Zur Verstellung des Federwegs der Gabel ist das eine Federbein 28 mit einer Federwegsverstellung 29 ausgerüstet. Diese weist einen mit dem Tauchrohr 2 verbundenen Verstellzylinder 8 auf, in dem ein mit der Kolbenstange 6 verbundener, drehbarer Verstellkolben 9 geführt ist. Beidseits des Verstellkolbens 9 befinden sich Zylinderräume 13, 14, die durch Verschlussdeckel 20, 20a abgeschlossen sind.
Die Kolbenstange 6 ist drehfest mit dem Verstellkolben 9 sowie mit einer Drehstange 10 verbunden, welche das obere Ende 11 des Federbeins 28 überragt und eine Drehhandhabe 12 aufweist. Durch Drehen der Drehhandhabe 12 und damit des Verstellkolbens 9, kann ein in Fig.1 nicht dargestellter Verbindungskanal zwischen dem Zylinderraum 13 und dem Zylinderraum 14 des Verstellzylinders 8 geöffnet oder geschlossen werden. Bei geöffnetem Verbindungskanal kann die Flüssigkeit bei einer Längsverschiebung des Verstellkolbens 9 von dem Zylinderraum 13 in den Zylinderraum 14 beziehungsweise in umgekehrte Richtung überströmen. Wird der Verbindungskanal geschlossen, bilden die beiden Zylinderräume 13 und 14 flüssigkeitsdichte Kammern. Auf diese Weise ist der Verstellkolben 9 in seiner jeweiligen Hubposition blockierbar.

Bei geöffnetem Verbindungskanal kann durch Ausüben eines Drucks P auf die Federgabel 1 der Verstellkolben 9 nach unten gedrückt werden, wodurch der Federweg verkürzt wird. Wird bei geöffnetem Verbindungskanal Zug auf die Federgabel 1 ausgeübt, bewegt sich der Verstellkolben 9 im Verstellzylinder 8 nach oben und der Federweg wird verlängert. Durch Verschließen des Verbindungskanals kann der Verstellkolben 9 in seiner jeweiligen Position blockiert werden.

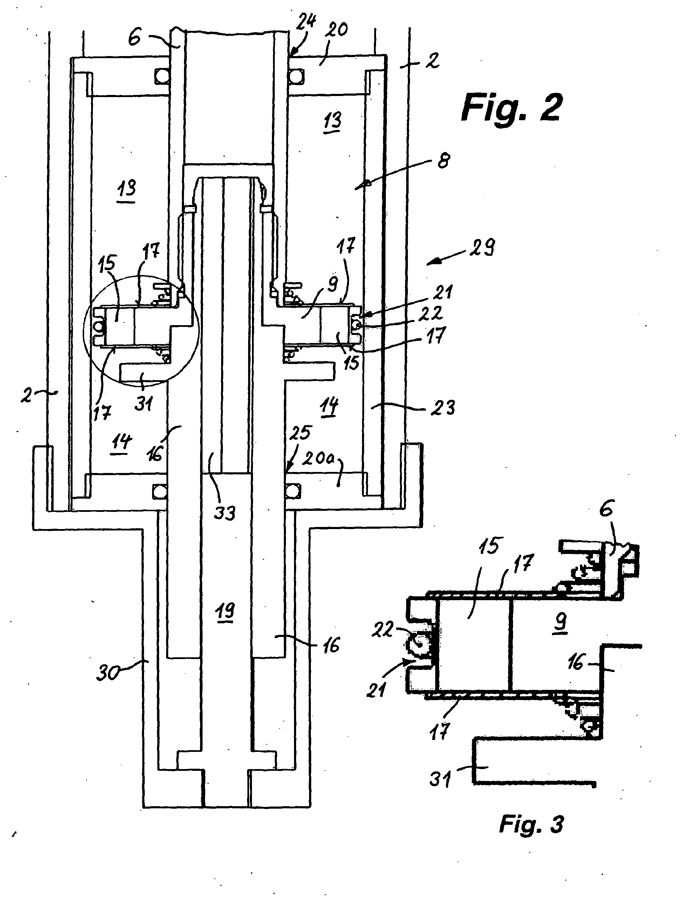

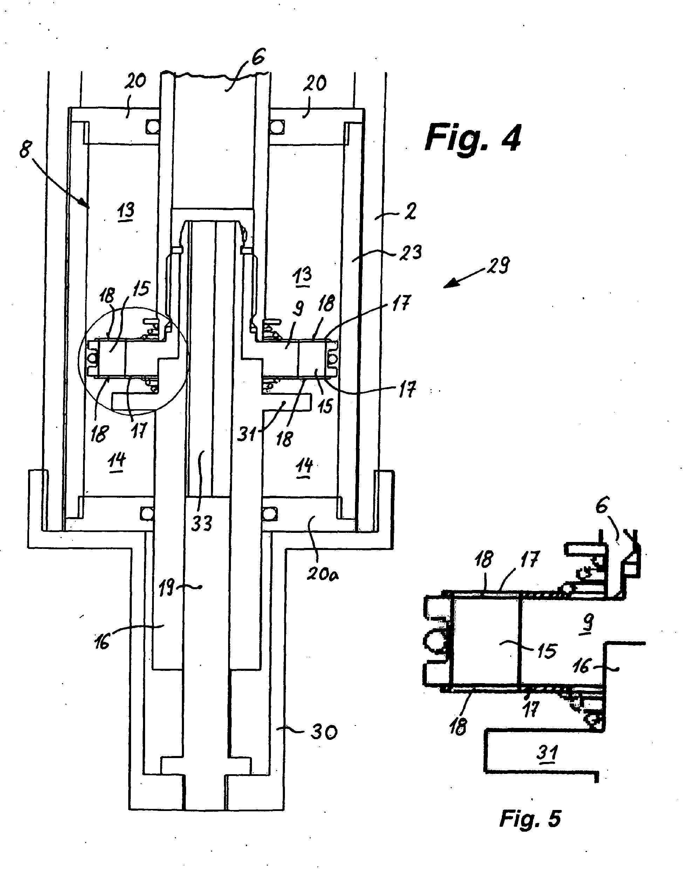

Fig.2 zeigt die Federweg-Verstelleinrichtung 29 mit Verstellzylinder 8 und den damit zusammenwirkenden Teilen im Längsschnitt. Der in dem Verstellzylinder 8 längs geführte, verdrehbare Verstellkolben 9 ist drehfest mit der Kolbenstange 6 verbunden. Wie bereits vorerwähnt, ist mit der Kolbenstange 6 eine Drehstange 10 mit einer Drehhandhabe 12 verbunden, so dass darüber der Verstellkolben 9 verdrehbar ist.
Der Verstellkolben 9 weist zwei Durchgangsbohrungen 15 auf, die Verbindungskanäle zwischen dem Zylinderraum 13 und dem Zylinderraum 14 bilden. Beiderseits des Verstellkolbens 9 sind drehfest mit einem Halteelement 16 verbundene Stellscheiben 17 angeordnet.
Der Verstellkolben 9 befindet sich in Fig.2 in Schließposition. Zwei mit den Durchgangsbohrungen 15 im Verstellkolben 9 deckungsgleich bringbare Öffnungen 18 (Fig.4,5), welche die Stellscheiben 17 jeweils durchsetzen, sind in der in Fig. 2 dargestellten Schließposition nicht sichtbar.
Zur Verdeutlichung der Schließstellung zeigt Fig.3 einen vergrößerten Ausschnitt aus Fig.2. Hier ist ersichtlich, dass die Durchgangsbohrungen 15 des Verstellkolbens 9 von den Stellscheiben 17 dicht abgedeckt sind.

Die Fig.4 und 5 zeigen den Verstellkolben 9 in Öffnungsposition. Wie insbesondere aus Fig.5 erkennbar, liegen die Öffnungen 18 der Stellscheiben 17 deckungsgleich über den Durchgangsbohrungen 15 des Verstellkolbens 9, so dass ein Verbindungskanal gebildet ist, durch den die Flüssigkeit im Verstellzylinder 8 zwischen den Zylinderräumen 13, 14 hin- und herfließen kann. Durch ein Verdrehen des Verstellkolbens 9 relativ zu den Stellscheiben 17, welche drehfest am Halteelement 16 angeordnet sind, können somit die Verbindungskanäle geöffnet oder geschlossen werden.

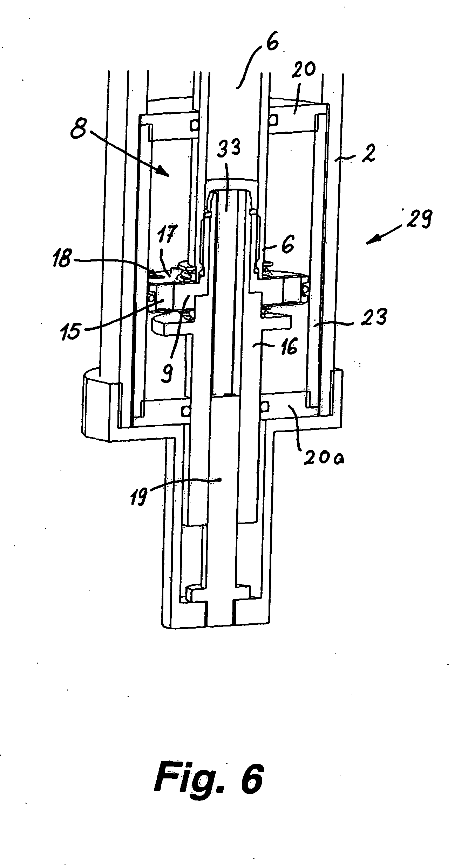

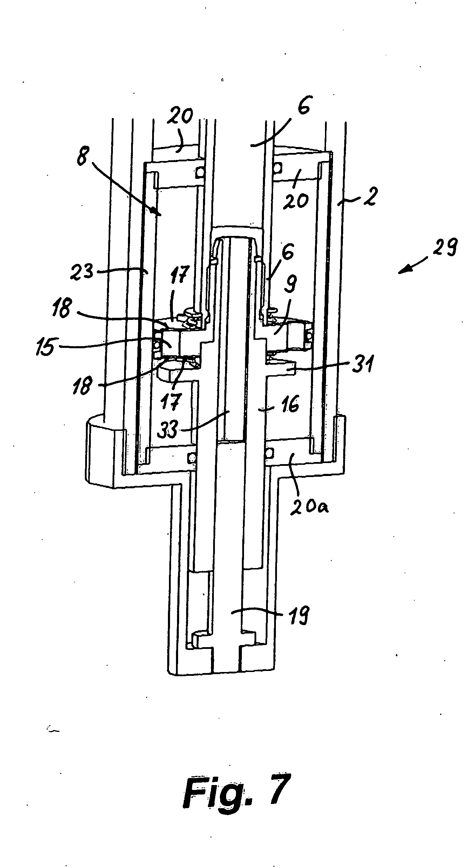

Die Stellscheiben 17 sind zum Verstellkolben 9 hin federbeaufschlagt und liegen somit dichtend an den Flachseiten des Verstellkolbens 9 an.
Die perspektivische Schnittdarstellung gemäß Fig. 6 zeigt die Schließstellung des Verstellkolbens 9. Die in der oberen Stellscheibe 17 erkennbare Öffnung 18 liegt dabei in Drehrichtung versetzt zur Durchgangsbohrung 15 des verdrehbaren Verstellkolbens 9. Aus Fig.7 ist die Öffnungsstellung mit deckungsgleich übereinander liegenden Öffnungen 18 der Stellscheiben 17 und Durchgangsbohrungen 15 des Verstellkolbens 9 ersichtlich.

Im Ausführungsbeispiel ist der Verstellzylinder 8 als geschlossene Kartusche mit einem oberen Verschlussdeckel 20 und unteren Verschlussdeckel 20a ausgebildet. Der Verstellkolben 9 ist mit einem in einer Ringnut 21 befindlichen Dichtungsring 22 gegenüber der Zylinderwand 23 abgedichtet, so dass ein Flüssigkeitsaustausch zwischen den beiden Zylinderräumen 13, 14 nur bei geöffnetem Verbindungskanal stattfinden kann.

Der obere Verschlussdeckel 20 weist eine abgedichtete Durchgangsöffnung 24 für die Kolbenstange 6 und der untere Verschlussdeckel 20a eine abgedichtete Durchgangsöffnung 25 für das stangenförmige Halteelement 16 auf, so dass der Verstellzylinder trotz ihn durchgreifender Funktionselemente ein "geschlossenes System".

Der Verstellkolben 9 ist mit dem Halteelement 16 längs verschiebbar und relativ zu diesem verdrehbar verbunden. Mit dem Tauchrohr 2 beziehungsweise einem unteren Tauchrohrabschluss 30 ist das Halteelement 16 drehfest und längs verschiebbar verbunden. Dazu ist ein Mehrkantstift 19 mit seinem unteren Ende mit dem Tauchrohrabschluss 30 fest verbunden und greift in eine längsverlaufende Mehrkant-Innenhöhlung 33 des Halteelementes 16 ein. Dieses ist dadurch längs verschiebbar geführt und gegen Verdrehen gesichert. Auf diese Weise werden die Stellscheiben 17 auch in unterschiedlichen Hubpositionen des Verstellkolbens 9 drehfest gehalten.
Die Länge des Mehrkantstiftes 19 und die Länge des unteren Endes des Halteelements 16 sind auf den vorgesehenen Verstellweg des Verstellkolbens 9 abgestimmt, damit in jeder Hubposition des Verstellkolbens 9 beide Elemente ineinander greifen.

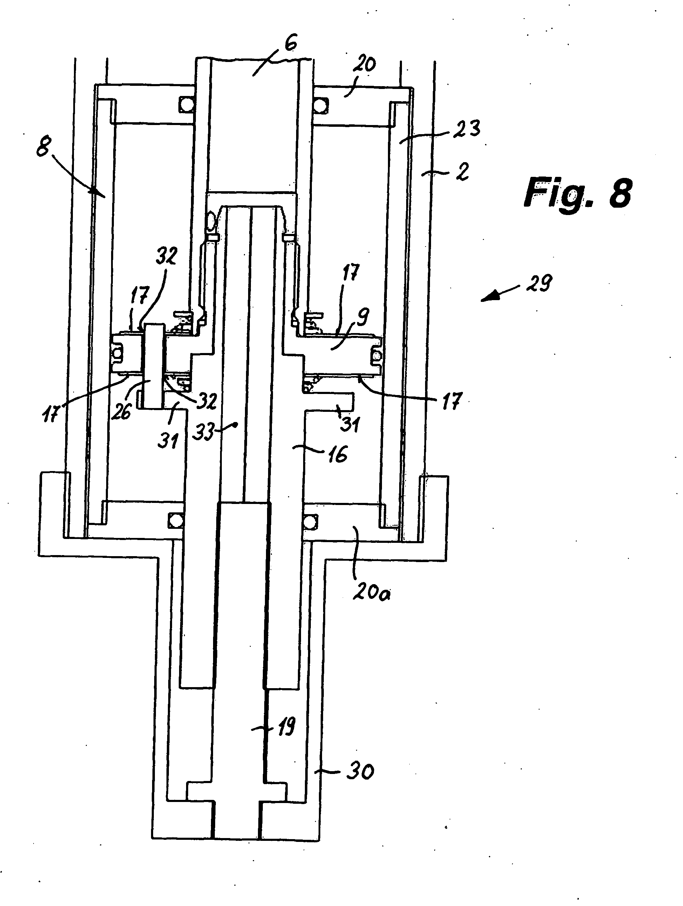

In der in Fig.8 gezeigten, gegenüber den anderen verdrehten Längsschnittdarstellung ist ein Haltestift 26 erkennbar, der zur drehfesten Verbindung zwischen den Stellscheiben 17 und dem Halteelement 16 vorgesehen ist. Der Haltestift 26 ist an einem Flansch 31 des Halteelements 16 angebracht. Er greift in dafür vorgesehene Löcher 32 der Stellscheiben 17 ein und durchgreift den Verstellkolben 9 innerhalb eines im Kolben 9 befindlichen Teilumfangschlitzes, durch den die Drehung des Verstellkolbens 9 relativ zu den mit dem Haltestift 26 verbundenen Stellscheiben 17 ermöglicht ist.

## Patentansprüche

1. Federgabel (1) für Zweiräder, insbesondere Fahrräder, die ein Tauchrohr (2) und ein Standrohr (3) mit einem Federelement (4) aufweist, das von einem mit dem Tauchrohr (2) in Verbindung stehenden Kolben (5) beaufschlagt ist, wobei der Kolben (5) eine Kolbenstange (6) hat, die mit dem Tauchrohr (2) höhenverstellbar verbunden ist, wobei dazu ein mit dem Tauchrohr (2) verbundener Verstellzylinder (8) vorgesehen ist, in dem ein mit der Kolbenstange (6) verbundener Verstellkolben (9) geführt ist und die beidseitig des Verstellkolbens (9) befindlichen Zylinderräume (13,14) mit Flüssigkeit gefüllt sind und wenigstens einen öffen- und schließbaren Verbindungskanal zum Überströmen der Flüssigkeit aufweisen, **dadurch gekennzeichnet, dass** der Verbindungskanal den Verstellkolben (9) durchsetzt und der Verstellkolben zum Öffnen oder Schließen des Verbindungskanals drehbar ist und dass wenigstens einseitig des Verstellkolbens (9) eine drehfest mit dem Tauchrohr (2) oder einem Tauchrohrdeckel (30) verbundene Stellscheibe (17) angeordnet ist, die jeweils mindestens eine mit einer Durchgangsbohrung (15) im Verstellkolben (9) deckungsgleich bringbare Öffnung (18) aufweist.

2. Federgabel nach Anspruch 1, **dadurch gekennzeichnet, dass** die Kolbenstange (6) an ihrem unteren Endbereich (7) mit dem Tauchrohr (2) verbunden ist.

3. Federgabel nach Anspruch 1 oder 2, **dadurch gekennzeichnet, dass** das untere Ende der Kolbenstange (6) höhenverstellbar ist.

4. Federgabel nach einem der Ansprüche 1 bis 3, **dadurch gekennzeichnet, dass** die Stellscheibe (17) drehfest mit einem Halteelement (16) verbunden ist.

5. Federgabel nach einem der Ansprüche 1 bis 4, **dadurch gekennzeichnet, dass** die Kolbenstange (6) drehfest mit dem Verstellkolben (9) sowie mit einer Drehstange (10) verbunden ist, welche das obere Ende des Federbeins (11) überragt und eine Drehhandhabe (12) aufweist und dass der Verstellkolben (9) mit seiner Durchgangsbohrung (15) durch Verdrehen der Drehstange (10) deckungsgleich mit der jeweiligen Öffnung (18) in der Stellscheibe (17) bringbar ist.

6. Federgabel nach Anspruch 4 oder 5, **dadurch gekennzeichnet, dass** das drehfest mit der Stellscheibe (17) verbundene Halteelement (16) mit dem Verstellkolben (9) längs verschiebbar gekoppelt sowie drehfest und längs verschiebbar mit dem Tauchrohr (2) und/oder einem Tauchrohrdeckel (30) verbunden ist.

7. Federgabel nach einem der Ansprüche 4 bis 6, **dadurch gekennzeichnet, dass** zur drehfesten Verbindung zwischen der Stellscheibe (17) und dem Halteelement (16) an diesem ein Haltestift (26) vorgesehen ist, der in Löcher (32) der Stellscheiben (17) eingreift und den Verstellkolben (9) innerhalb eines im Kolben (9) befindlichen Teilumfangschlitzes durchgreift.

8. Federgabel nach einem der Ansprüche 1 bis 7, **dadurch gekennzeichnet, dass** die Stellscheibe (17) zum Verstellkolben (9) hin federbeaufschlagt ist.

9. Federgabel nach einem der Ansprüche 1 bis 8, **dadurch gekennzeichnet, dass** der Verstellzylinder (8) als geschlossene Ölkartusche ausgebildet ist.

10. Federgabel nach einem der Ansprüche 1 bis 9, **dadurch gekennzeichnet, dass** der Verstellzylinder (8) an beiden Enden Verschlussdeckel (20,20a) jeweils mit einer abgedichteten Durchgangsöffnung (24) für die Kolbenstange (6) und mit einer abgedichteten Durchgangsöffnung (25) am unteren Ende für das stangenförmige Halteelement (16) aufweist.

11. Federgabel nach einem der Ansprüche 4 bis 10, **dadurch gekennzeichnet, dass** die Länge des unteren Endes des stangenförmigen Halteelements (16) entsprechend dem maximal vorgesehenen Verstellweg des Verstellkolbens (9) bemessen ist.

12. Federgabel nach einem der Ansprüche 4 bis 11, **dadurch gekennzeichnet, dass** das Halteelement (16) als Verdrehsicherung eine längsverlaufende Mehrkant-Innenhöhlung (33) und einen in der Innenhöhlung längs verschiebbar geführten, mit dem Tauchrohr (2) und/oder dem Tauchrohrdeckel verbundenen Mehrkantstift (19) aufweist.

## Claims

1. Suspension fork (1) for two-wheeled vehicles, particularly bicycles, which comprises a tube (2) and a stanchion (3) having a resilient element (4) that is acted upon by a piston (5) connected to the tube (2), the piston (5) having a piston rod (6) which is connected to the tube (2) in height-adjustable manner, while for this purpose a movable cylinder (8) connected to the tube (2) is provided in which a movable piston (9) connected to the piston rod (6) is guided and the cylinder chambers (13, 14) located on both sides of the moving piston (9) are filled with fluid and comprise at least one connecting channel that can be opened and closed for the overflow of fluid, **characterised in that** the connecting channel passes through the moving piston (9) and the moving piston is rotatable in order to open or close the connecting channel and at least on one side of the moving piston (9) is provided a washer disc (17) connected for rotation with the tube (2) or a tube cover (30), said washer disc comprising at least one opening (18) that can be brought into a position of congruence with a through-bore (15) in the moving piston (9).

2. Suspension fork according to claim 1, **characterised in that** the piston rod (6) is connected to the tube (2) at its lower end region (7).

3. Suspension fork according to claim 1 or 2, **characterised in that** the lower end of the piston rod (6) is height-adjustable.

4. Suspension fork according to one of claims 1 to 3, **characterised in that** the washer disc (17) is connected for rotation with a retaining element (16).

5. Suspension fork according to one of claims 1 to 4, **characterised in that** the piston rod (6) is connected for rotation with the moving piston (9) and with a rotary rod (10) that projects beyond the upper end of the suspension strut (11) and has a rotary handle (12) and that the moving piston (9) with its through-bore (15) can be brought into a position of congruence with the respective opening (18) in the washer disc (17) by rotating the rotary rod (10).

6. Suspension fork according to claim 4 or 5, **characterised in that** the retaining element (16) that is connected for rotation with the washer disc (17) is coupled to the moving piston (9) in longitudinally movable manner and is connected for rotation and in longitudinally movable manner with the tube (2) and/or a tube cover (30).

7. Suspension fork according to one of claims 4 to 6, **characterised in that** a retaining pin (26) is provided on the retaining element (16) for connecting the latter for rotation with the washer disc (17), said retaining pin (26) engaging in holes (32) in the washer discs (17) and passing through the moving piston (9) within a partial circumferential slot provided in the piston (9).

8. Suspension fork according to one of claims 1 to 7, **characterised in that** the washer disc (17) is spring-biased towards the moving piston (9).

9. Suspension fork according to one of claims 1 to 8, **characterised in that** the moving cylinder (8) is in the form of a sealed oil cartridge.

10. Suspension fork according to one of claims 1 to 9, **characterised in that** the moving cylinder (8) comprises at both ends closure covers (20, 20a) each with a sealed through-opening (24) for the piston rod (6) and with a sealed through-opening (25) at the lower end for the rod-shaped retaining element (16).

11. Suspension fork according to one of claims 4 to 10, **characterised in that** the length of the lower end of the rod-shaped retaining element (16) is of such dimensions as to correspond to the maximum envisaged displacement distance of the moving piston (9).

12. Suspension fork according to one of claims 4 to 11, **characterised in that** the retaining element (16) comprises as a rotation preventing device a longitudinally extending polygonal inner cavity (33) and a polygonal pin (19) that is guided to be longitudinally movable in the inner cavity and connected to the tube (2) and/or the tube cover.

## Revendications

1. Fourche télescopique (1) pour des véhicules à deux roues, en particulier pour des bicyclettes, qui présente un tube plongeur (2) et un tube fixe (3) pourvu d'un élément formant ressort (4) qui est sollicité par un piston (5) relié au tube plongeur (2), sachant que le piston (5) possède une tige de piston (6) qui est reliée au tube plongeur (2) avec possibilité de réglage en hauteur, sachant qu'il est prévu à cet effet un cylindre de réglage (8) relié au tube plongeur (2), cylindre dans lequel est guidé un piston de réglage (9) relié à la tige de piston (6), et dont les chambres de cylindre (13, 14) se trouvant de part et d'autre du piston de réglage (9) sont remplies de liquide et présentent au moins un canal de liaison, pouvant être ouvert et fermé, pour l'écoulement du liquide,
**caractérisée en ce que** le canal de liaison traverse le piston de réglage (9) et le piston de réglage est rotatif pour ouvrir ou fermer le canal de liaison, et **en ce qu'**un disque de réglage (17), relié en solidarité de rotation au tube plongeur (2) ou à un couvercle (30) de tube plongeur, est disposé au moins sur un côté du piston de réglage (9), disque qui présente respectivement au moins une ouverture (18) pouvant être amenée en coïncidence avec un perçage traversant (15) dans le piston de réglage (9).

2. Fourche télescopique selon la revendication 1, **caractérisée en ce que** la tige de piston (6) est reliée dans sa région terminale inférieure (7) au tube plongeur (2).

3. Fourche télescopique selon la revendication 1 ou 2, **caractérisée en ce que** l'extrémité inférieure de la tige de piston (6) est réglable en hauteur.

4. Fourche télescopique selon l'une des revendications 1 à 3, **caractérisée en ce que** le disque de réglage (17) est relié en solidarité de rotation à un élément de maintien (16).

5. Fourche télescopique selon l'une des revendications 1 à 4, **caractérisée en ce que** la tige de piston (6) est reliée en solidarité de rotation au piston de réglage (9) ainsi qu'à une tige rotative (10), qui dépasse de l'extrémité supérieure de la jambe de force à ressort (11) et qui présente une manette rotative (12), et **en ce que** le perçage traversant (15) du piston de réglage (9) peut, par rotation de la tige rotative (10), être amené en coïncidence avec l'ouverture respective (18) dans le disque de réglage (17).

6. Fourche télescopique selon la revendication 4 ou 5, **caractérisée en ce que** l'élément de maintien (16) relié en solidarité de rotation au disque de réglage (17) est couplé avec possibilité de déplacement longitudinal au piston de réglage (9), et est relié en solidarité de rotation et avec possibilité de déplacement longitudinal au tube plongeur (2) et/ou à un couvercle (30) de tube plongeur.

7. Fourche télescopique selon l'une des revendications 4 à 6, **caractérisée en ce que,** pour la liaison en solidarité de rotation entre le disque de réglage (17) et l'élément de maintien (16), il est prévu sur ce dernier une broche de maintien (26), qui s'engage dans des trous (32) du disque de réglage (17) et qui traverse le piston de réglage (9) à l'intérieur d'une fente périphérique partielle se trouvant dans le piston (9).

8. Fourche télescopique selon l'une des revendications 1 à 7, **caractérisée en ce que** le disque de réglage (17) est sollicité par ressort en direction du piston de réglage (9).

9. Fourche télescopique selon l'une des revendications 1 à 8, **caractérisée en ce que** le cylindre de réglage (8) est réalisé sous forme de cartouche d'huile fermée.

10. Fourche télescopique selon l'une des revendications 1 à 9,
**caractérisée en ce que** le cylindre de réglage (8) présente aux deux extrémités des couvercles de fermeture (20, 20a) respectivement pourvus d'une ouverture de passage étanchée (24) pour la tige de piston (6) et d'une ouverture de passage étanchée (25) à l'extrémité inférieure pour l'élément de maintien (16) en forme de tige.

11. Fourche télescopique selon l'une des revendications 4 à 10,
**caractérisée en ce que** la longueur de l'extrémité inférieure de l'élément de maintien (16) en forme de tige est dimensionnée conformément à la course de réglage maximale prévue du piston de réglage (9).

12. Fourche télescopique selon l'une des revendications 4 à 11,
**caractérisée en ce que** l'élément de maintien (16) présente comme blocage en rotation une cavité intérieure polygonale (33) s'étendant longitudinalement, et une broche polygonale (19) guidée en déplacement longitudinal dans la cavité intérieure et reliée au tube plongeur (2) et/ou au couvercle de tube plongeur.
